# EUROPEAN PATENT APPLICATION

(11) **EP 2 258 612 A1**
(43) Date of publication of application: **08.12.2010**
(21) Application number: 09162011.2
(22) Date of filing: 05.06.2009
(51) Int. Cl.: B62K 3/00, B62K 5/02, B62K 15/00, B62M 1/04

(54) **Tricycle with driving units**

(71) Applicant: Laing Ban International Inc., Sinjhuang City, Taipei County 242 (TW)
(72) Inventor: Huang, Wen-Hung, 220, Taipei County (TW)
(74) Representative: Dossmann, Gérard

(57) **Abstract**

A tricycle includes a head tube (15) with a post (1) connected to a first end thereof and a front wheel (141) is connected to a lower end of the head tube (15). A handle (12) is foldably connected to the post (1). Two swing links (2,2) pivotably connected to the head tube (15) by a front wheel seat (14) on the head tube (15) and each swing link (2) includes a footboard (17) and a rear wheel (18) connected to each of the footboards (17,17). Two pedals (82,82) are pivotably connected to the two footboards (17,17) and each pedal (82) is cooperated with a driving unit (8) which includes a rotary unit (831) and driving unit (832). The rotary unit (831) is activated by pressing the pedal (82) and the driving unit (832) can only drive the rear wheel (18) in one direction. The user holds the handles (12,12) and steps on the footboards (17,17), by twisting his or her body, the tricycle moves forward as conventional tricycle. By alternatively pressing the pedals (82,82), the rear wheels (18,18) accelerate by the driving unit (832) such that the tricycle can move faster. The handles (12,12), the two swing links (2,2) and the pedals (82,82) are foldable to make the tricycle be compact size.

## Description

The present invention relates to a tricycle, and more particularly, to a foldable tricycle having two driving units operated by two pedals and the tricycle moves faster by the operation of the driving units.

Some tricycles are known to applicant are disclosed in U.S. Patent No. 6,467,781, U.S. Patent No. 6,517,093, U.S. Patent No. 6,554,302 and U.S. Patent No. 6,851,694. All of the disclosed tricycles include a post connected to the front wheel and two swing links arms respectively connected with two rear wheels. The user stands on two footboards on the swing links and twists his or her body to generate a force to move the tricycle forward. Some tricycles include joints which allow the tricycle to be folded in smaller size which is benefit for carry and transportation.

The force that moves the tricycle forward is the weight of the user and the torque that the user applies to the tricycle. However, the tricycle is difficult to control its direction because the user has to operate the front wheel left and right repeatedly. In addition, the speed of the conventional tricycles is limited and cannot move faster, the users can easily feel boring.

The present invention intends to provide a tricycle which is able to move faster then the conventional tricycles.

The present invention relates to a tricycle which comprises a post connected to a front wheel seat and a front wheel is connected to the front wheel seat. A head tube is connected to a top of the front wheel seat and a clamping member is connected to the head tube. Two swing links are connected to the clamping member and two footboards are respectively connected to the two swing links. Two rear wheels are connected to the two footboards. A first folding unit is connected between the post and the front wheel seat. The first folding unit includes a base part, a connection member and a fastening member, wherein the base part is received in the head tube and has an engaging slot defined in a top thereof. The connection member is secured to a lower end of the post by the fastening member and has an insertion which is pivotably connected to the engaging slot. An elongate slot is defined through the connection member and the post is mounted to the connection member, a pin extends through the post and the elongate slot so as to allow the post to move along the elongate slot. The fastening member is mounted to the post to fasten the post to the connection member.

Two second folding units are respectively connected between the swing links and the clamping members. Each second folding unit includes a fixing bar, a folding member and a pin. The fixing bar is fixed to the clamping member corresponding thereto and includes a horizontal groove and a vertical groove. The folding member is fixed to the swing link and includes a tongue and two blocks on two sides of the tongue. The tongue is engaged with the horizontal groove and the two blocks engaged with the vertical groove. The tongue includes a slide slot and a fixing pin extends through the fixing bar and the slide slot so that the folding member is movable within the horizontal slot. The fixing bar includes a first fix hole which is located in alignment with a second fix hole in the tongue. Another pin extends through the first fix hole and the second fix hole to connect the fixing bar and the folding member.

Two third folding units are respectively connected between the two footboards and the two swing links. Each third folding unit includes a mounting member and an end member. The mounting member has a pair of clamping arms between which the swing link is securely clamped. A locking device is connected to the pair of clamping arms to securely clamp the swing link. Two lips are located to the mounting member and opposite to the clamping arms. Each lip has a guide slot, an engaging recess defined in a surface of the mounting member and located between the two lips. The end member is fixed to an underside of the footboard and includes a tubular member which includes an annular groove with which the swing link is engaged. A protrusion is located on an outside of the tubular member and a gap is defined between the protrusion and the tubular member. The protrusion includes a notch defined in axially therein and a reception recess is defined through the protrusion. The protrusion is located between the two lips. A lever is located in the notch and has a stub extending from an inside thereof. The stub is removably inserted into the reception recess and a spring is biased between the lever and an inside of the notch. Two pins extend through the guide slots and are connected to the protrusion so that the end member is pivotable about two pins.

Two driving units are respectively connected between the footboards and the rear wheels. Each driving unit includes a pair of side panels, a pedal and a driving device. The two side panels are connected to the underside of the footboard and extend toward the rear wheel. A pair of frames are connected to an underside of the pedal which is pivotably connected between the side panels by the frames. Two springs are connected between the side panels and the pedal. One of the two frames has a driving arm and a driving member is connected a distal end of the driving arm. The driving device is fixed to one of the side panels and includes a rotary device and a one-way driving device which is co-axially connected with the rotary device. The rotary device includes a transmission gear and a coil spring. The transmission gear is connected with the driving member and a first end of the coil spring is connected to the side panel. A second end of the coil spring is engaged with the transmission gear. The one-way driving device includes a one-way gear and a driving gear. The one-way gear is driven by the rotary device and drives the driving gear in one direction. The rear wheel includes a rear wheel axle which is connected between the two side panels. The rear wheel axle has a passive gear which is engaged with and driven by the driving gear.

In addition, the present invention provides a third embodiment of the two driving units which are respectively connected between the footboards and the rear wheels. Each driving unit includes a pair of side panels, a pedal and a driving device. The two side panels are connected to the underside of the footboard and extend toward the rear wheel. The pedal is connected to an end of the footboard and pivotably connected to a swing arm. A first gear is connected to the swing arm and a second gear is located between the first gear and the rear wheel. The driving device includes a transmission gear, a one-way gear, a driving member and a spring. The transmission gear and the one-way gear are mounted to a rear wheel axle of the rear wheel. The one-way gear is located between the transmission gear and the rear wheel axle. The one-way gear is driven by the transmission gear and drives the rear wheel axle and the rear wheel to rotate in one direction. The driving member is a chain which has a first end fixed to the side panel that is located close to the first gear and a second end of the driving member is engaged with the first and second gears and the transmission gear and is then connected with the spring which is fixed to the side panel.

The present invention provides a second embodiment of the two driving units which are respectively connected between the footboards and the rear wheels. Each driving unit includes a support member, a pedal and a driving device. The support frame is connected to an underside to the footboard and the pedal is located on a top of the footboard. A swing arm and a curved rack are connected to a lower end of the pedal. The swing arm is pivotably connected to the support member and a spring is connected between the support frame and the swing arm. The driving device is fixed to the support member and includes a rotary device and a one-way driving device which his co-axially connected to the rotary device. The rotary device includes a transmission gear and a coil spring. The transmission gear is engaged with the curved rack and the coil spring is connected between the support member and the transmission gear. The one-way driving device includes a one-way gear, a driving gear and a driving member. The one-way gear is driven by the rotary device and drives the driving gear and the driving member in one direction. The rear wheel includes a rear wheel axle which is rotatably connected to the support member and the rear wheel axle has a passive gear which is engaged with the driving member and driven by the driving member.

The primary object of the present invention is to provide a tricycle which includes two driving units cooperated with the two rear wheels and the driving units are operated by repeatedly pressing two pedals on the two footboards so as to accelerate the tricycle.

The present invention will become more obvious from the following description when taken in connection with the accompanying drawings which show, for purposes of illustration only, a preferred embodiment in accordance with the present invention.
Fig. 1 is a perspective view to show the tricycle of the present invention;
Fig. 2 is an exploded view to show the first folding unit of the tricycle of the present invention;
Fig. 3 is an exploded view to show the suspension unit of the tricycle of the present invention;
Fig. 4 is an exploded view to show the shock absorbing unit of the tricycle of the present invention;
Fig. 5 is an exploded view to show the second folding unit of the tricycle of the present invention;
Fig. 6 is an exploded view to show the third folding unit of the tricycle of the present invention;
Fig. 7 is an exploded view to show the driving unit of the tricycle of the present invention;
Fig. 8 is a side view to show the driving unit, the rear wheel and the pedal of the tricycle of the present invention;
Fig. 9 is a side view to show that the driving unit is activated by pressing the pedal downward to drive the rear wheel of the tricycle of the present invention;
Fig. 10 is a side view to show that the driving unit is not affected when the pedal bounces upward;
Fig. 11 is a front view to show that the suspension unit is installed to the tricycle of the present invention;
Figs. 12 and 13 are two front views to show that the suspension unit is activated when the two swing links are operated;
Fig. 14 is a side view to show the shock absorbing unit of the tricycle of the present invention is activated;
Fig. 15 is a side view to show that the first folding unit is operated to release the post upward;
Fig. 16 shows that the post is folded toward the swing links;
Fig. 17 is a top view to show the two pins of the second folding unit are released and the two swing links are pulled away from the post;
Fig. 18 is a top view to show that the two swing links are pivoted to each other;
Fig. 19 is a side partial cross sectional view to show that the lever of the third folding unit is pulled outward;
Fig. 20 shows that the footboard is pulled away from the post;
Fig. 21 shows that the footboard is pivoted to be parallel to the swing link;
Fig. 22 is a side view to show that the tricycle of the present invention is folded;
Fig. 23 is a top view to show that the tricycle of the present invention is folded;
Fig. 24 is a perspective view to show the tricycle of the present invention, wherein a second embodiment of the driving units are installed;
Fig. 25 is an exploded view to show the second embodiment of the driving unit of the tricycle of the present invention;
Fig. 26 is a side view to show that the pedal cooperated with the second embodiment of the driving unit is not yet pressed downward;
Fig. 27 is a side view to show that the pedal in Fig. 26 is pressed downward to drive the rear wheel;
Fig. 28 is a side view to show that the driving unit in Fig. 27 is not affected when the pedal bounces upward;
Fig. 29 is a perspective view to show the tricycle of the present invention, wherein a third embodiment of the driving units are installed;
Fig. 30 is an exploded view to show the third embodiment of the driving unit of the tricycle of the present invention;
Fig. 31 is a side view to show that the pedal cooperated with the third embodiment of the driving unit is not yet pressed downward;
Fig. 32 is a side view to show that the pedal in Fig. 31 is pressed downward to drive the rear wheel, and
Fig. 33 is a side view to show that the driving unit in Fig. 32 is not affected when the pedal bounces upward.

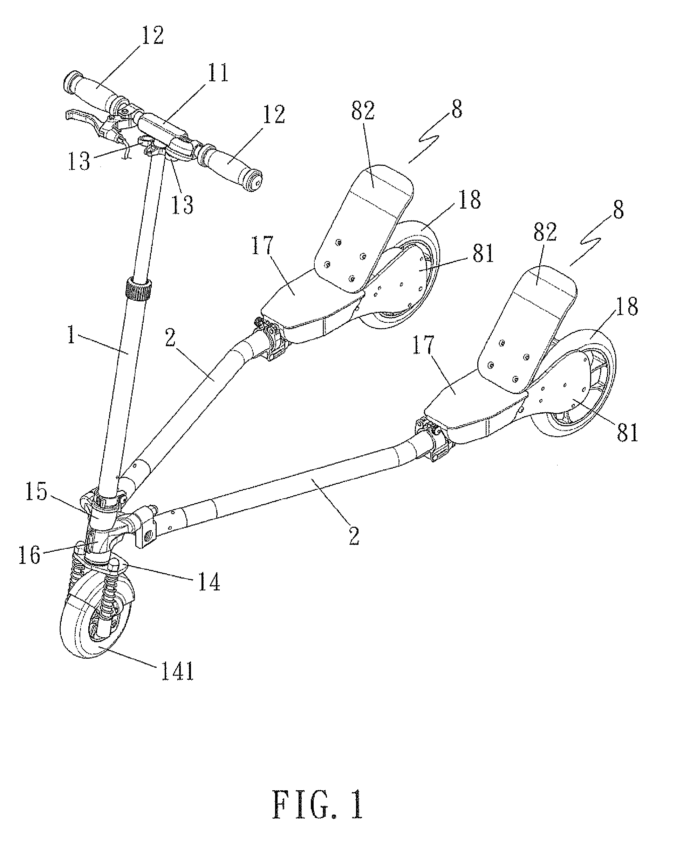

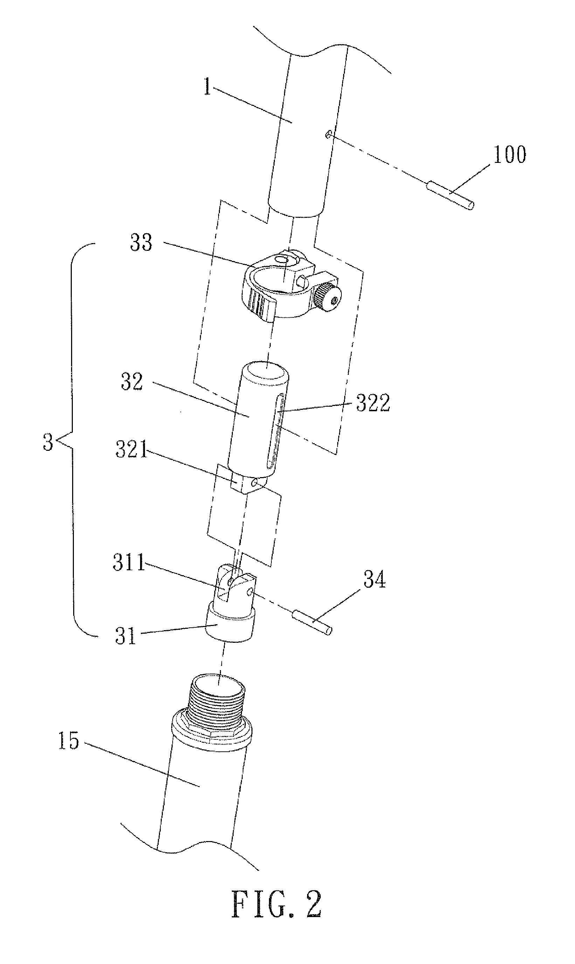

Referring to Fig. 1, the tricycle of the present invention can be made by materials such as Iron, Aluminum, Magnesium, Titanium, composite material, carbon iron, glass fibers, plastic, wood or bamboos, the tricycle comprises a post 1 connected to a front wheel seat 14 and a front wheel 141 is connected to the front wheel seat 14. A head tube 15 is connected to a top of the front wheel seat 14 and a clamping member 16 is connected to the head tube 15. Two swing links 2 are connected to the clamping member 16 and two footboards 17 are respectively connected to the two swing links 2. Two rear wheels 18 are connected to the two footboards 17. As shown in Fig. 2, a first folding unit 3 is connected between the post 1 and the front wheel seat 14. The first folding unit 3 includes a base part 31, a connection member 32 and a fastening member 33. The base part 31 is received in the head tube 15 and has an engaging slot 311 defined in a top thereof. The connection member 32 is secured to a lower end of the post 1 by the fastening member 33 and has an insertion 321 which is pivotably connected to the engaging slot 311. An elongate slot 322 is defined through the connection member 32 and the head tube 15 is mounted to the connection member 32. A pin 34 extends through the engaging slot 311 of the base part 31 and the insertion 321 to pivotably connect the connection member 32 to the base part 31. The post 1 is mounted to the connection member 32 and a pin 100 extends through the post 1 and the elongate slot 322 of the connection member 32. By this way, the post 1 can be moved relative to the connection member 32 with the pin 100 moving along the elongate slot 322.

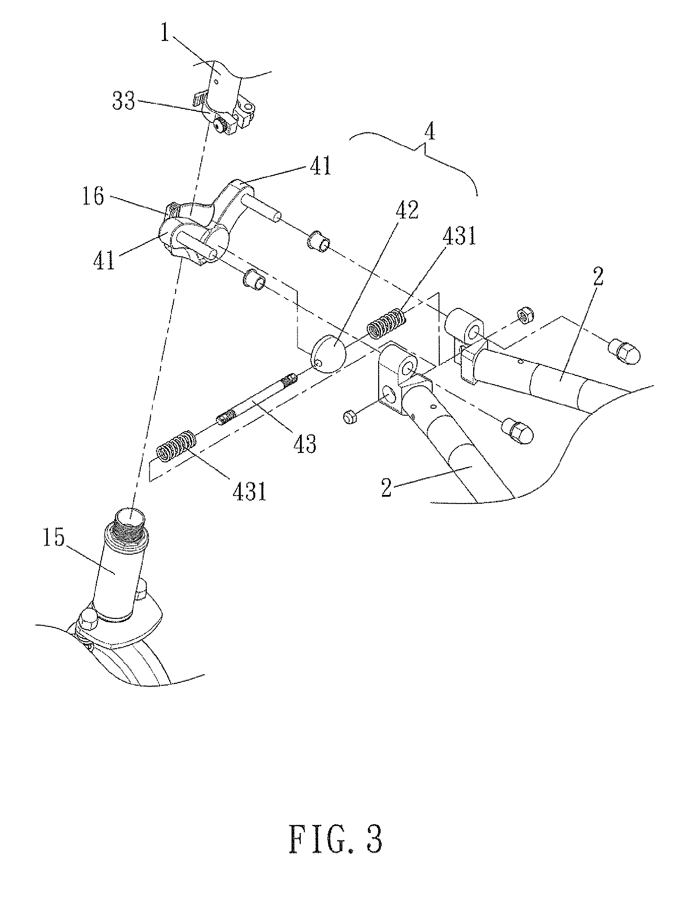

As shown in Fig. 3, a suspension unit 4 is connected between the clamping member 16 and the two swing links 2. The suspension unit 4 includes a pair of cantilever arms 41 which are pivotably connected to the clamping member 16. The second folding units 6 are connected between the two cantilever arms 41 and the two swing links 2. A dome head 42 is located between the two cantilever arms 41 and a transverse link 43 extends through the dome head 42. Two springs 431 are mounted to two ends of the transverse link 43 and biased between the dome head 42 and the cantilever arms 41.

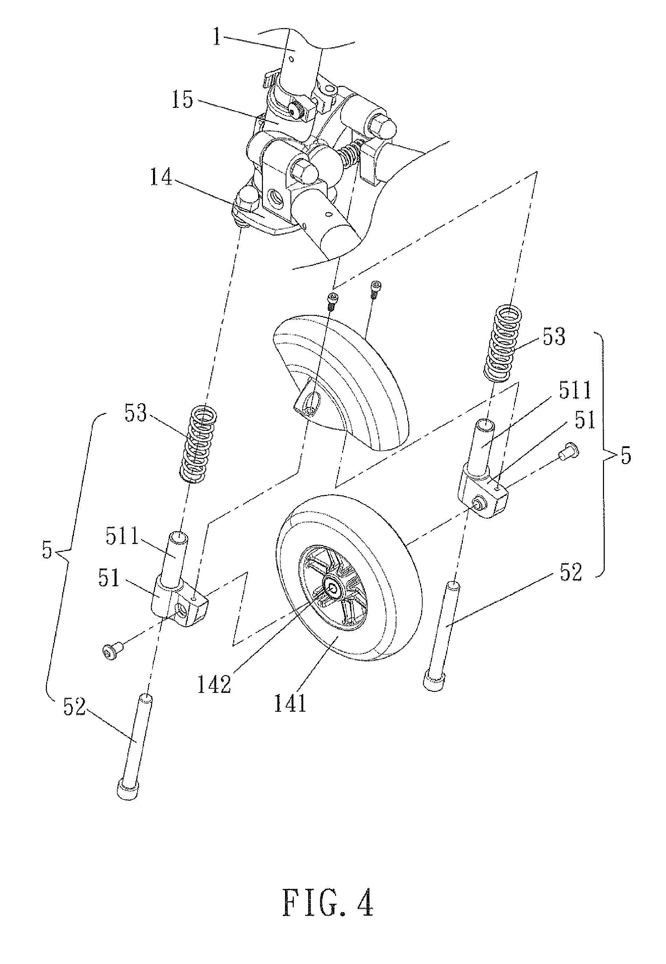

As shown in Fig. 4, two shock absorbing units 5 are located on two sides of the front wheel 141 and each shock absorbing unit 5 includes a base member 51, a rod 52 and a spring 53. The base member 51 is fixed to a front wheel axle 142 and has an extension tube 511. The rod 52 extends through the base member 51 and the extension tube 511 from an underside of the base member 51. The spring 52 is mounted to the extension tube 511. The rod 52 is fixed to the front wheel seat 14 and the spring 53 is biased between the front wheel seat 14 and the base member 51.

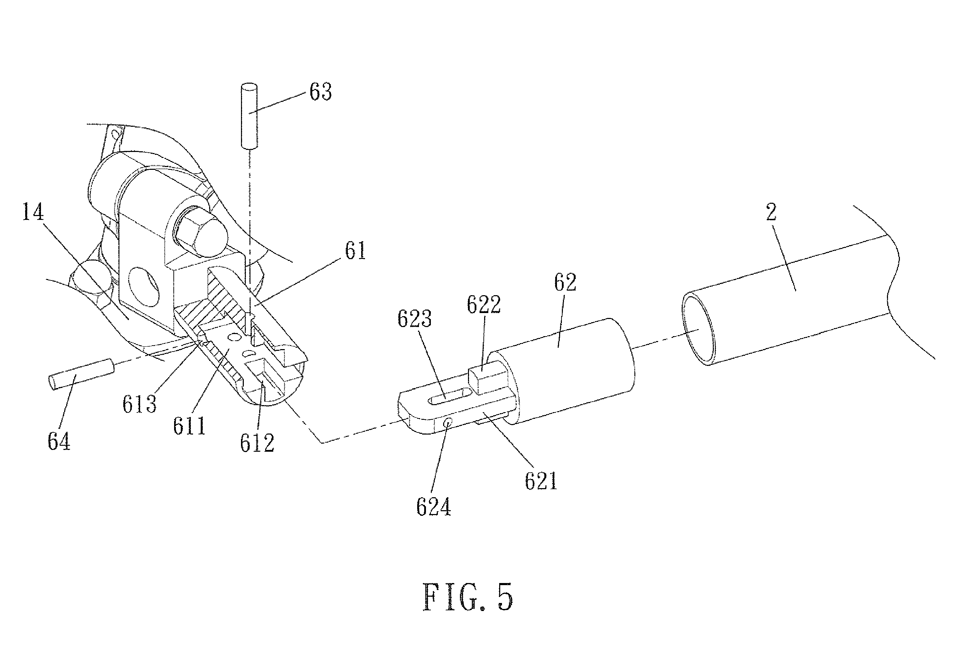

As shown in Fig. 5, two second folding units 6 are respectively connected between the swing links 2 and the clamping member 16. Each second folding unit 6 includes a fixing bar 61, a folding member 62 and a pin 64, wherein the fixing bar 61 is fixed to the clamping member 16 corresponding thereto and includes a horizontal groove 611 and a vertical groove 612 which perpendicularly communicate with the horizontal groove 611. The folding member 62 is fixed to the swing link 2 and includes a tongue 621 and two blocks 622 on two sides of the tongue 621. The tongue 621 is engaged with the horizontal groove 611 and the two blocks 622 are engaged with the vertical groove 612. The tongue 621 includes a slide slot 623 and a fixing pin 63 extends through the fixing bar 61 and the slide slot 623 so that the folding member 62 is movable within the horizontal slot 611. The fixing bar 61 includes a first fix hole 613 which is located in alignment with a second fix hole 624 in the tongue 621. Another pin 64 extends through the first fix hole 613 and the second fix hole 624 to connect the fixing bar 61 and the folding member 62.

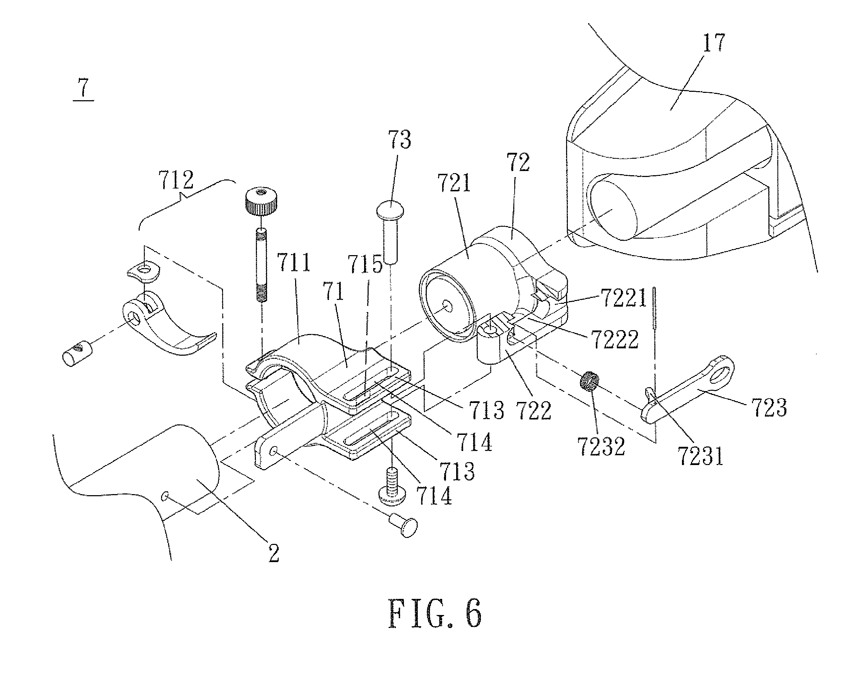

As shown in Fig. 6, two third folding units 7 are respectively connected between the two footboards 17 and the two swing links 2. Each third folding unit 7 includes a mounting member 71 and an end member 72, wherein the mounting member 71 has a pair of clamping arms 711 between which the swing link 2 is securely clamped. A locking device 712 is connected to the pair of clamping arms 711 to securely clamp the swing link 2. Two lips 713 are located to the mounting member 71 and opposite to the clamping arms 711, wherein each lip 713 has a guide slot 714. An engaging recess 715 is defined in a surface of the mounting member 71 and located between the two lips 713. The end member 72 is fixed to an underside of the footboard 17 and includes a tubular member 721 which includes an annular groove with which the swing link 2 is engaged. A protrusion 722 is located on an outside of the tubular member and a gap is defined between the protrusion 722 and the tubular member 721. The protrusion 722 includes a notch 7221 defined in axially therein and a reception recess 7222 is defined through the protrusion 722. The protrusion 722 is located between the two lips 713. A lever 723 is located in the notch 7221 and has a stub 7231 extending from an inside thereof. The stub 7231 is removably inserted into the reception recess 7222 and a spring 7232 is biased between the lever 723 and an inside of the notch 7221. Two pins 73 extend through the guide slots 714 and are connected to the protrusion 722 so that the end member 72 is pivotable about two pins 73.

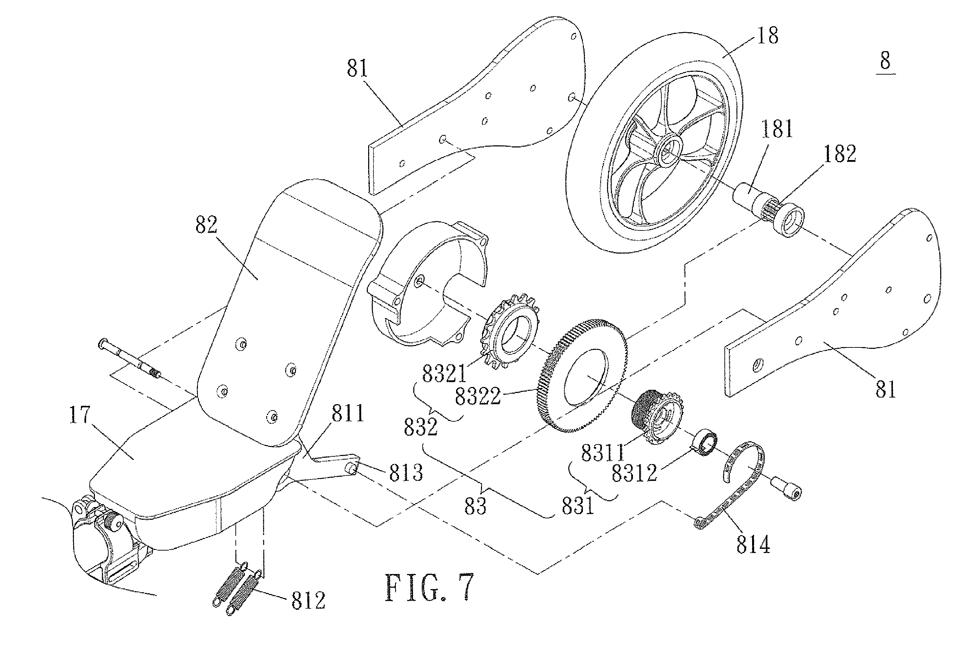

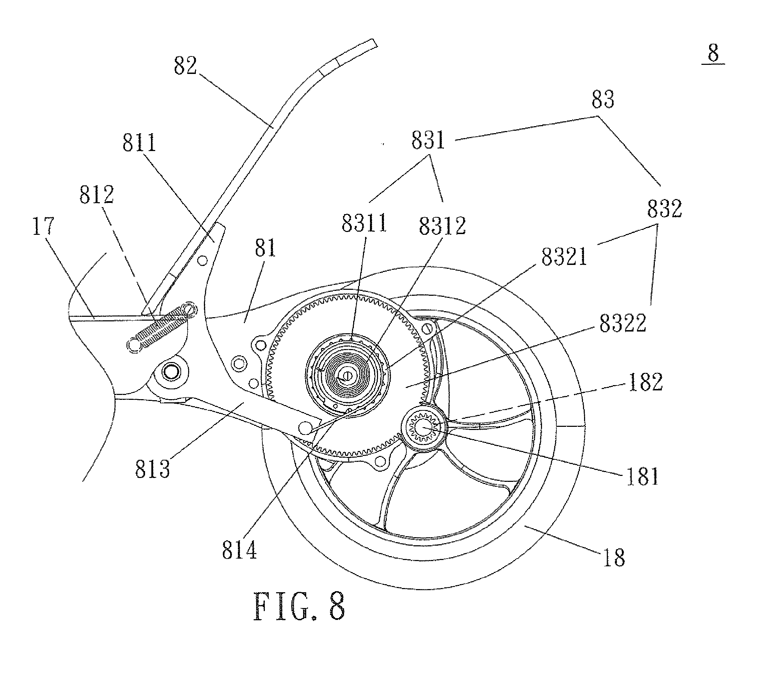

As shown in Figs. 7 and 8, two driving units 8 are respectively connected between the footboards 17 and the rear wheels 18. Each driving unit 8 includes a pair of side panels 81, a pedal 82 and a driving device 83. The two side panels 82 are connected to the underside of the footboard 17 and extend toward the rear wheel 18. A pair of frames 811 are connected to an underside of the pedal 82 which is pivotably connected between the side panels 81 by the frames 811. Two springs 812 are connected between the side panels 81 and the pedal 82. One of the two frames 811 has a driving arm 813 and a driving member 814 is connected a distal end of the driving arm 813. The driving member 814 can be a chain or a belt or a steel cable. In this embodiment, the driving member 814 is a chain. The driving device 83 is fixed to one of the side panels 81 and includes a rotary device 831 and a one-way driving device 832 which is co-axially connected with the rotary device 831. The rotary device 831 includes a transmission gear 8311 and a coil spring 8312. The transmission gear 8311 is connected with the driving member 814 and a first end of the coil spring 8312 is connected to the side panel 81. A second end of the coil spring 8312 is engaged with the transmission gear 8311. The one-way driving device 832 includes a one-way gear 8321 and a driving gear 8322. The one-way gear 8321 is driven by the rotary device 831 and drives the driving gear 8322 in one direction. The rear wheel 18 includes a rear wheel axle 181 which is connected between the two side panels 81. The rear wheel axle 181 has a passive gear 182 which is engaged with and driven by the driving gear 8322.

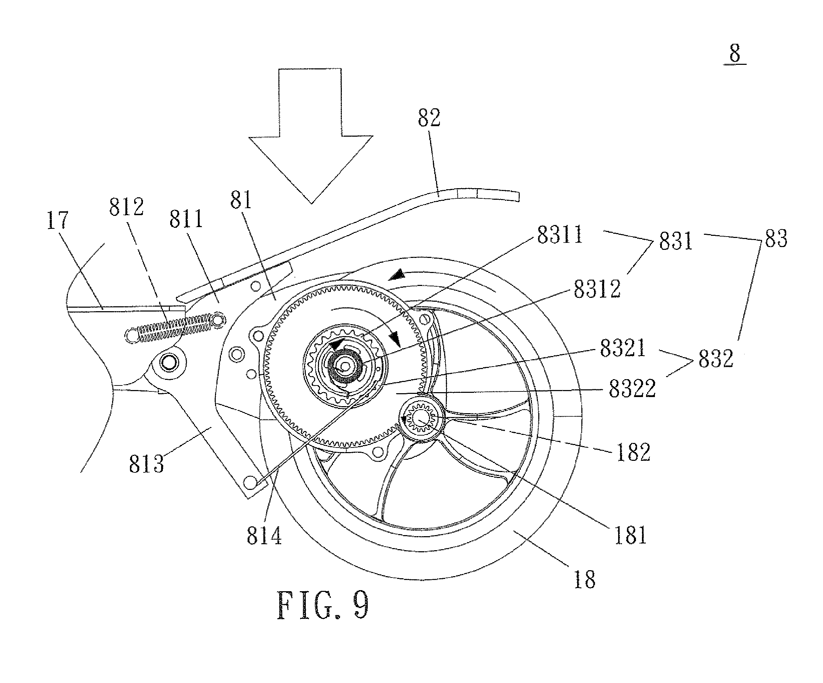

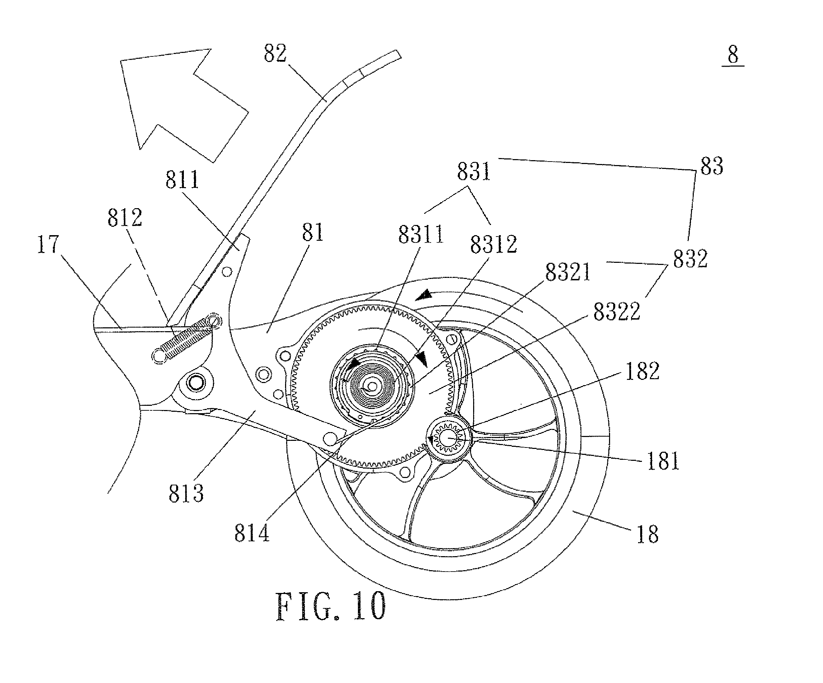

As shown in Figs. 9 and 10, the user holds the handles 12 and stands on the two footboards 17. When the user presses downward the two pedals 82 alternatively, the driving arm 813 of each driving unit 8 is pivoted downward and stretches the spring 812. The rotary device 831 of the driving unit 8 is then rotated by the driving member 814 which is pulled by the driving arm 813. The coil spring 8312 drives the transmission gear 8311 which drives the one-way driving device 832. The one-way gear 8321 and the driving gear 8322 are co-rotated and the driving gear 8322 drives the passive gear 182 of the rear wheel axle 18 such that the rear wheel 18 rotates and move the tricycle forward. When the user releases the pedal 82, the spring 812 bounces the pedal 82 upward as shown in Fig. 10 and the driving arm 813 pivots upward. The coil spring 8312 is released to rotate the transmission gear 8311 in opposite direction and the one-way gear 8321 is rotated in opposite direction. Nevertheless, the one-way gear 8321 does not output torque to the driving gear 8322 so that the rear wheel 18 keeps on rotating to move the tricycle forward.

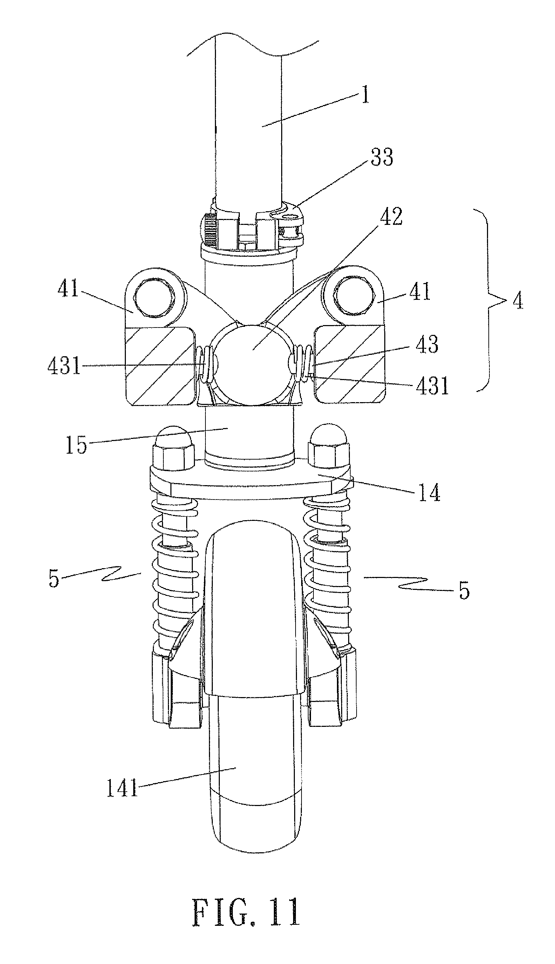

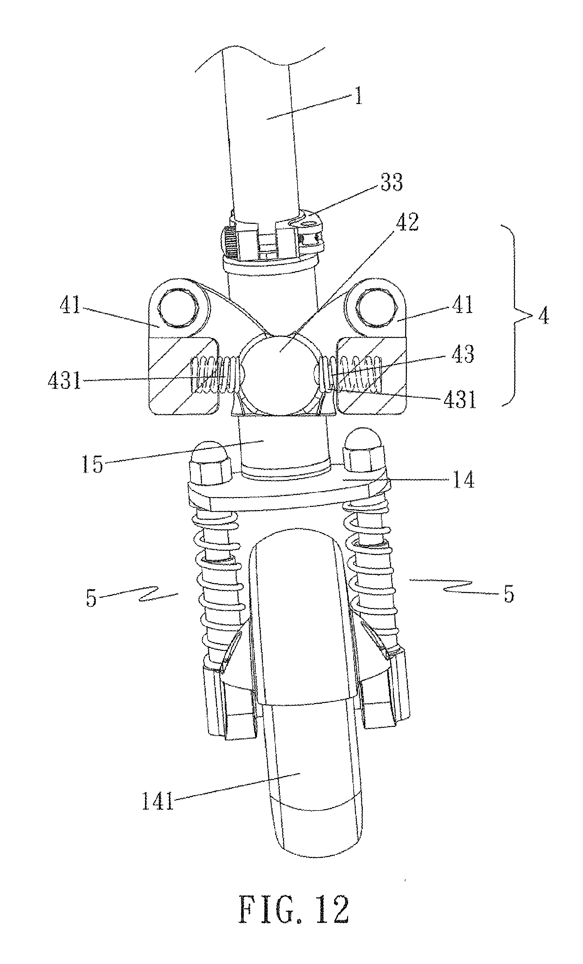

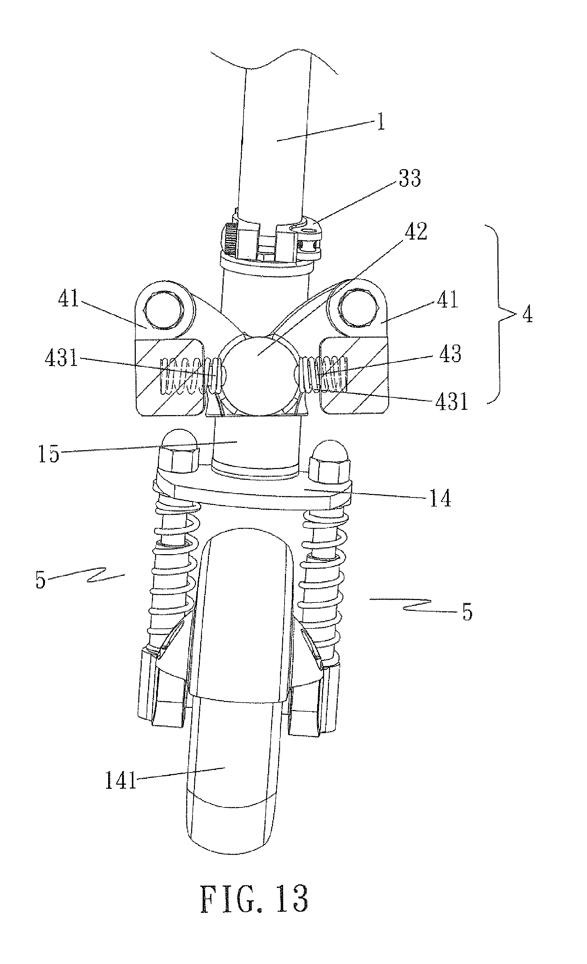

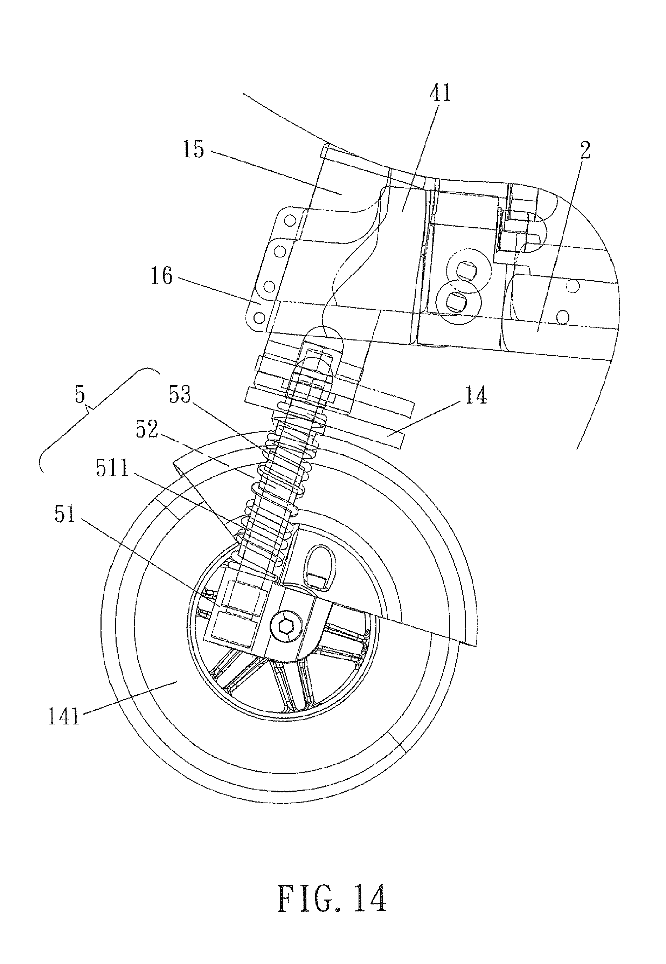

As shown in Figs. 11 to 13, when the user swings the handles 12 back and forth to move the tricycle, the cantilever arms 41 and the clamping member 16 are rotated in opposite directions. The springs 431 are compressed alternatively and provide a force to return the handles 12, the cantilever arms 41 and the swing links 2. Besides, when the front wheel 141 moves on rugged roads, the rods 52 of the shock absorbing unit 5 are lowered as shown in Fig. 14 and the springs 53 are compressed to absorb the shocks transferred to the tricycle.

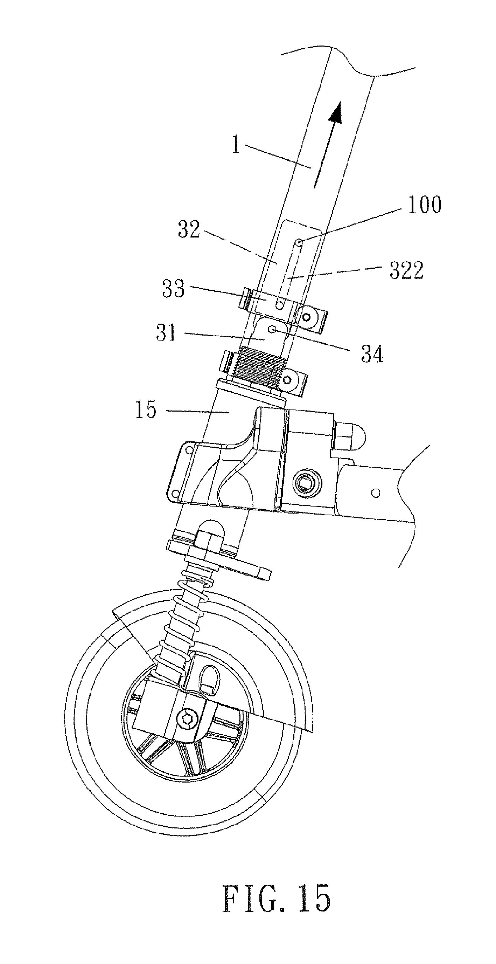

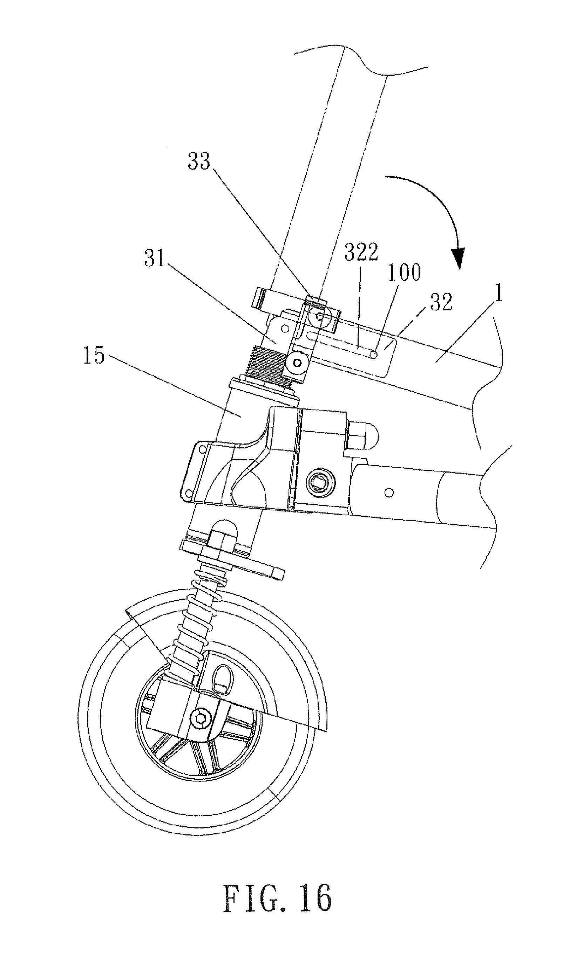

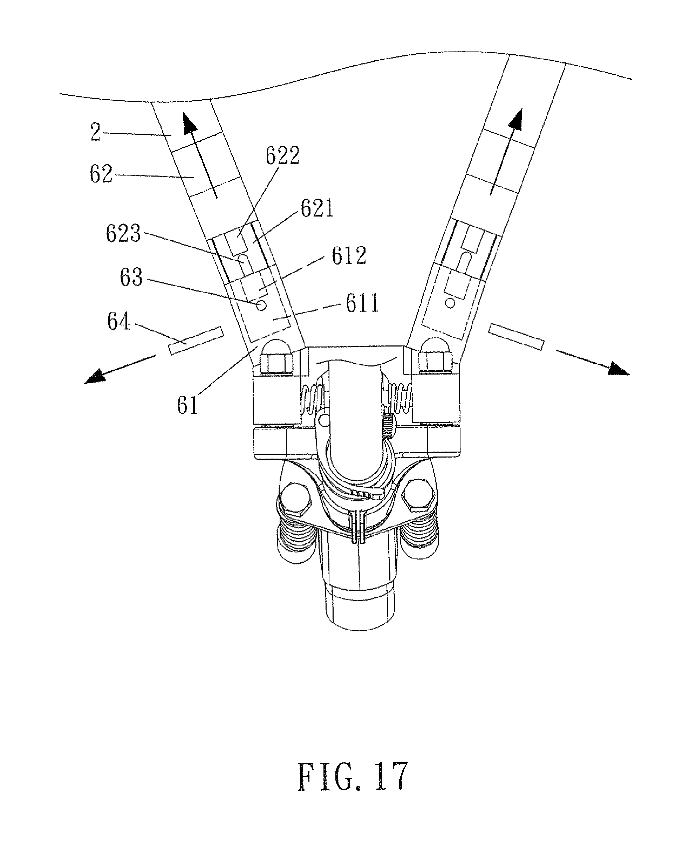

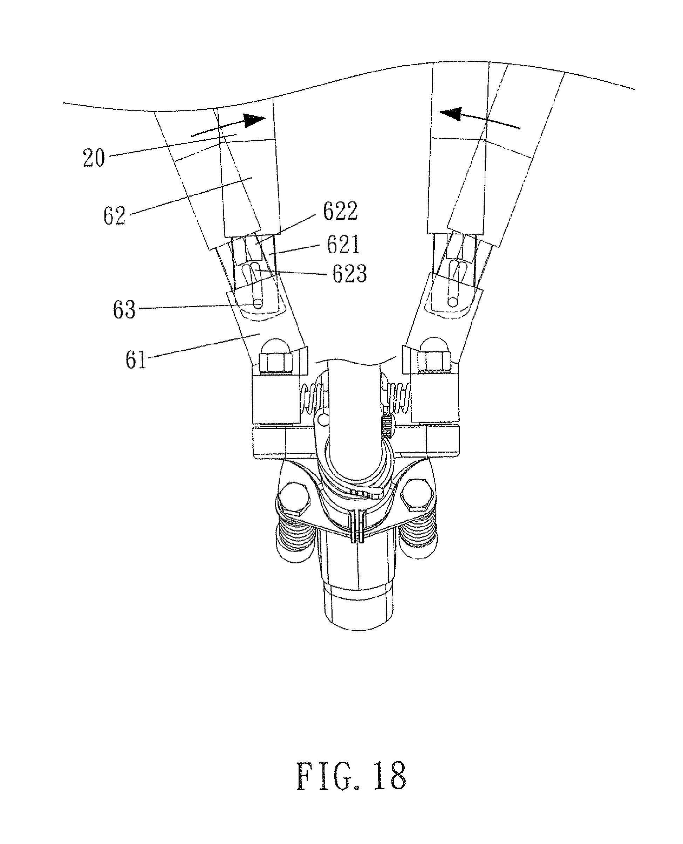

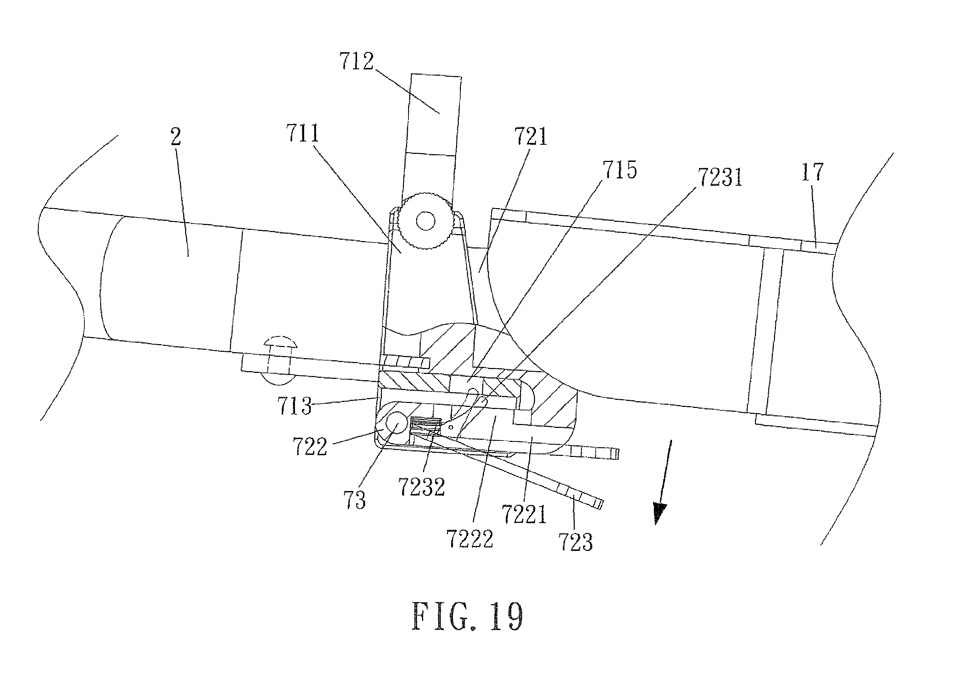

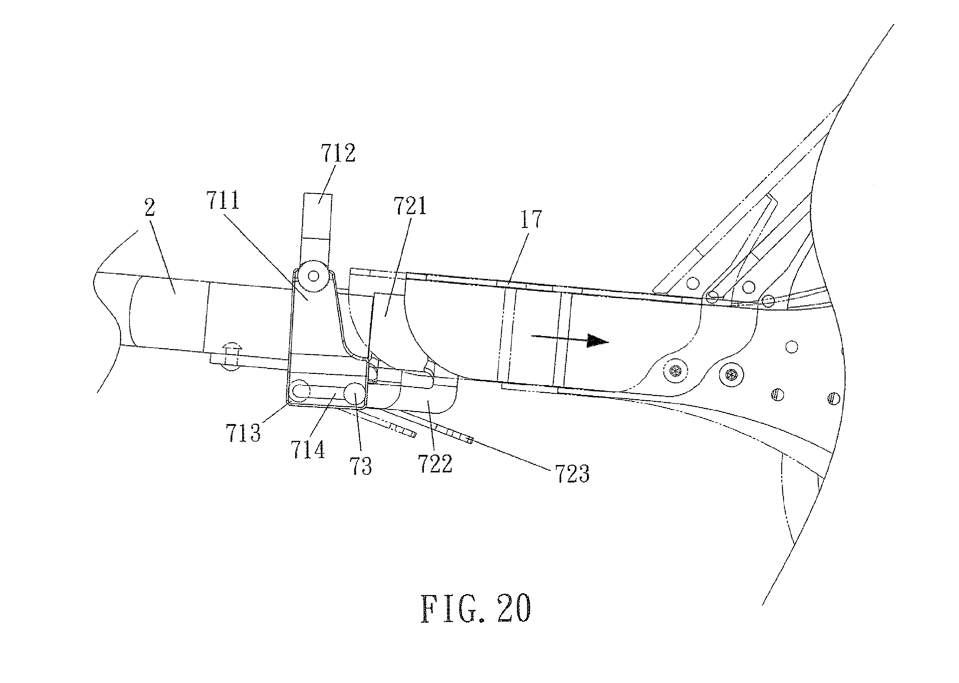

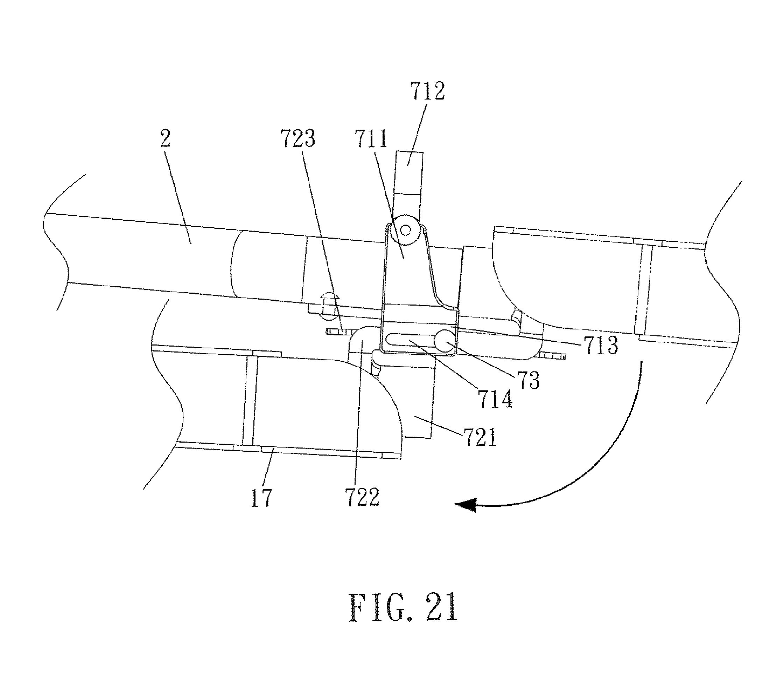

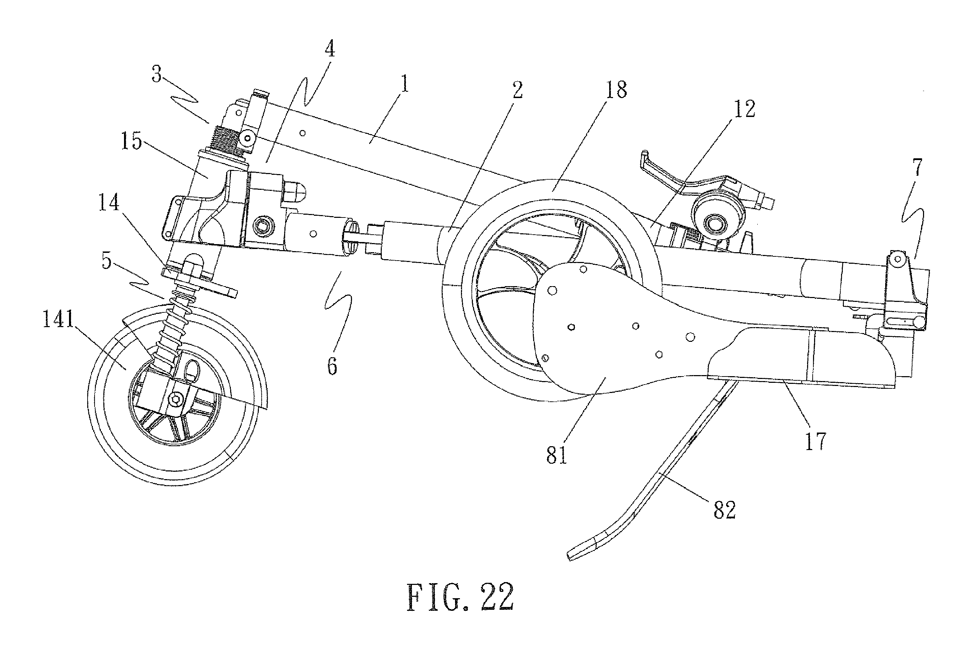

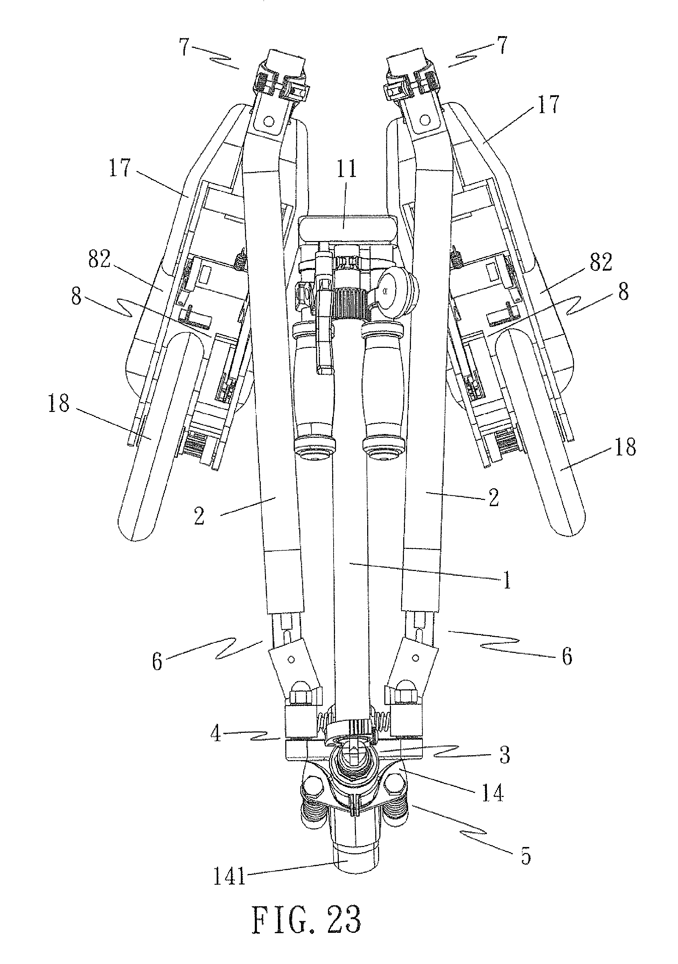

As shown in Figs. 15 to 20, the handles 12 can be removed from the transverse tube 11 on the top of the post 1 and then engaged to the positioning members 13 (Fig. 1) on the post 1. The fastening member 33 of the first folding unit 3 is then released and the post 1 is pulled upward by moving the pin 100 along the elongate slot 322 of the connection member 32 until joint of the insertion 321 and the engaging slot 311 is exposed. The post 1 can then be pivoted about the fixing pin 34 and toward the swing links 2 as shown in Fig. 16. The two pins 64 of the second folding unit 6 are then pulled out from the first and second fix holes 613, 624, and the two swing links 2 are pulled away from the front wheel 141 until the blocks 622 disengage from the vertical groove 612. The folding members 62 of the two swing links 2 can be pivoted about the fixing pins 63 and tongues 621 are pivoted within the horizontal grooves 611 such that the two swing links 2 are moved toward each other. As shown in Figs. 19 to 21, the locking device 712 of each of the third folding units 7 is first released to release the tubular member 721 and the clamping arm 711. The lever 723 is then pulled outward to compress the spring 7232 and the stub 7231 is removed from the engaging recess 715 of the mounting member 71. The footboard 17 is then able to be pulled as shown in Fig. 20 and the protrusion 722 moves between the two lips 712 of the mounting member 71. When the tubular member 721 is disengaged from the clamping arm 711 and the swing link 2, the footboard 17 together with the pedal 82 and the driving unit 8 can be pivoted downward about the pin 73 as shown in Figs. 22 and 23. By the folding actions, the tricycle can be folded to be compact and easily carried and transported.

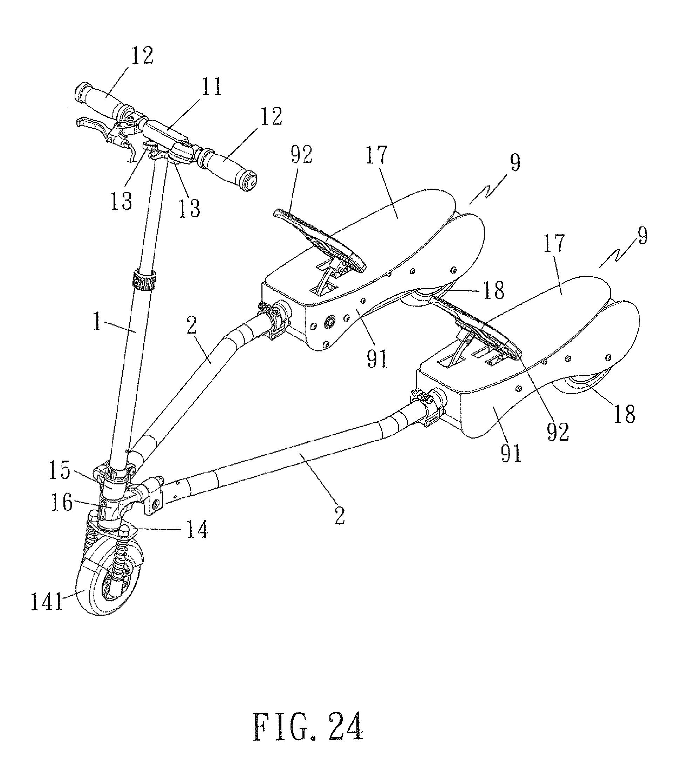

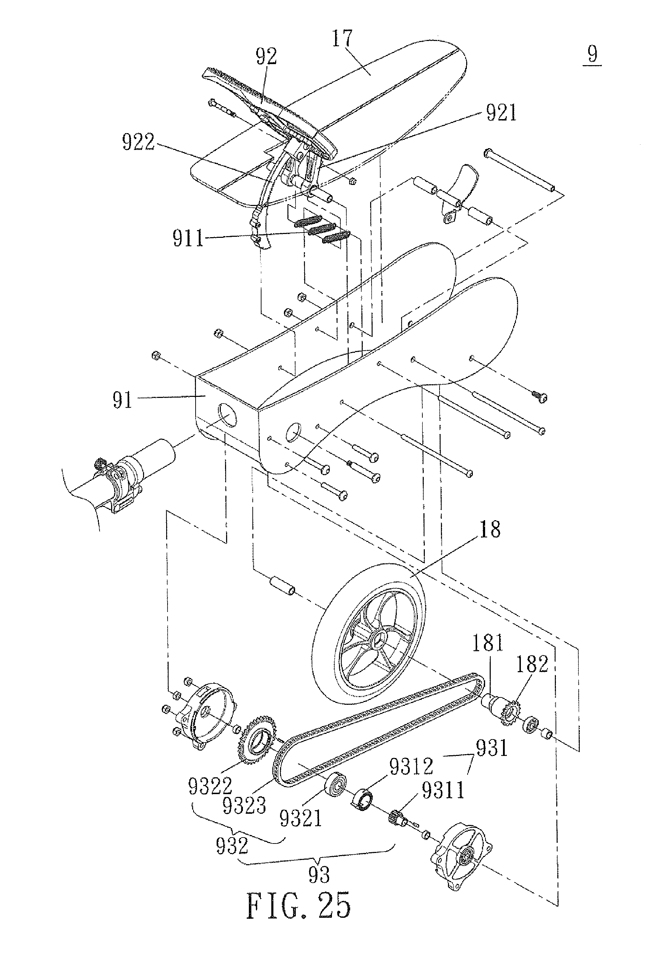

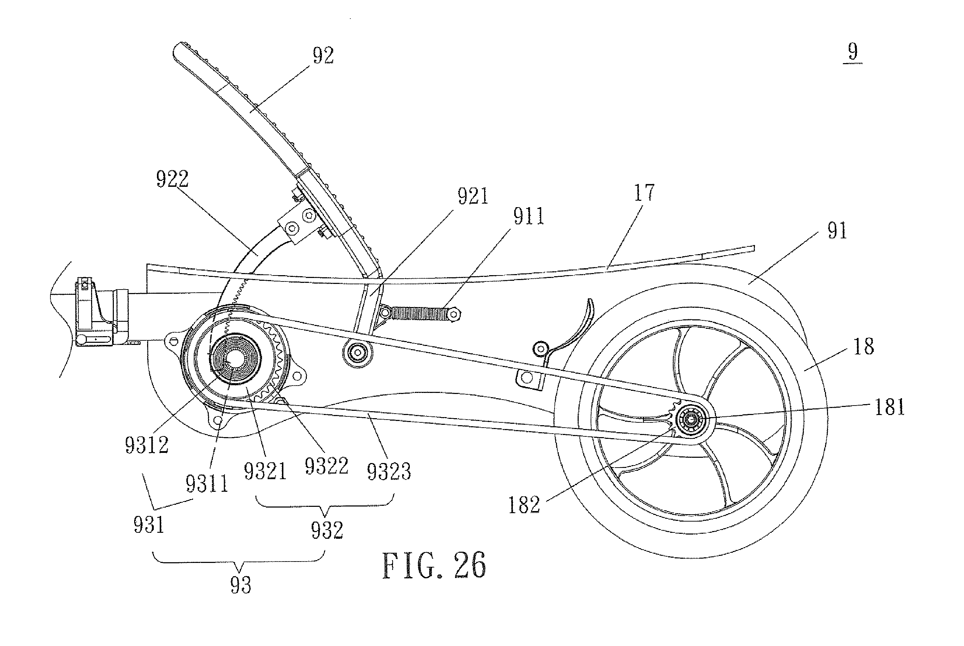

Figs. 24 to 26 show a second embodiment of the driving units of the tricycle, wherein the only difference form the first embodiment is the driving units 9.

The two driving units 9 are respectively connected between the footboards 17 and the rear wheels 18. Each driving unit 9 includes a support member 91, a pedal 92 and a driving device 93. The support frame 91 is connected to an underside to the footboard 17 and the pedal 92 is located on a top of the footboard 17. A swing arm 921 and a curved rack 922 are connected to a lower end of the pedal 92. The swing arm 921 is pivotably connected to the support member 91 and a spring 911 is connected between the support frame 91 and the swing arm 921. The driving device 93 is fixed to the support member 91 and includes a rotary device 931 and a one-way driving device 932 which his co-axially connected to the rotary device 931. The rotary device 931 includes a transmission gear 9311 and a coil spring 9312. The transmission gear 9311 is engaged with the curved rack 922 and the coil spring 9312 is connected between the support member 91 and the transmission gear 9311. The one-way driving device 932 includes a one-way gear 9321, a driving gear 9322 and a driving member 9323. The one-way gear 9321 is driven by the rotary device 931 and drives the driving gear 9322 and the driving member 9323 in one direction. The rear wheel 18 includes a rear wheel axle 181 which is rotatably connected to the support member 91 and the rear wheel axle 181 has a passive gear 182 which is engaged with the driving member 9323 and driven by the driving member 9323.

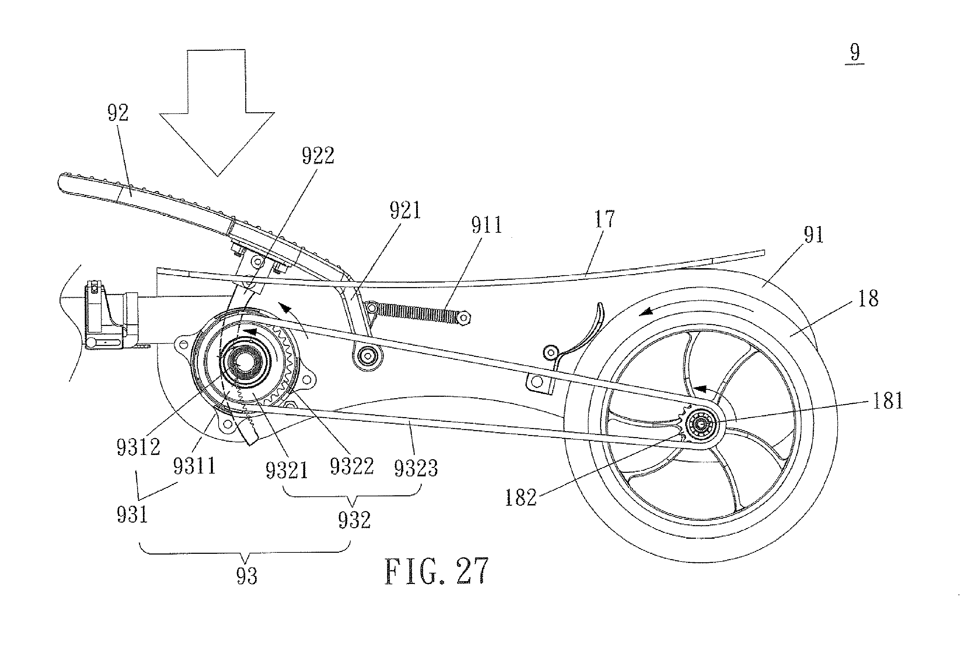

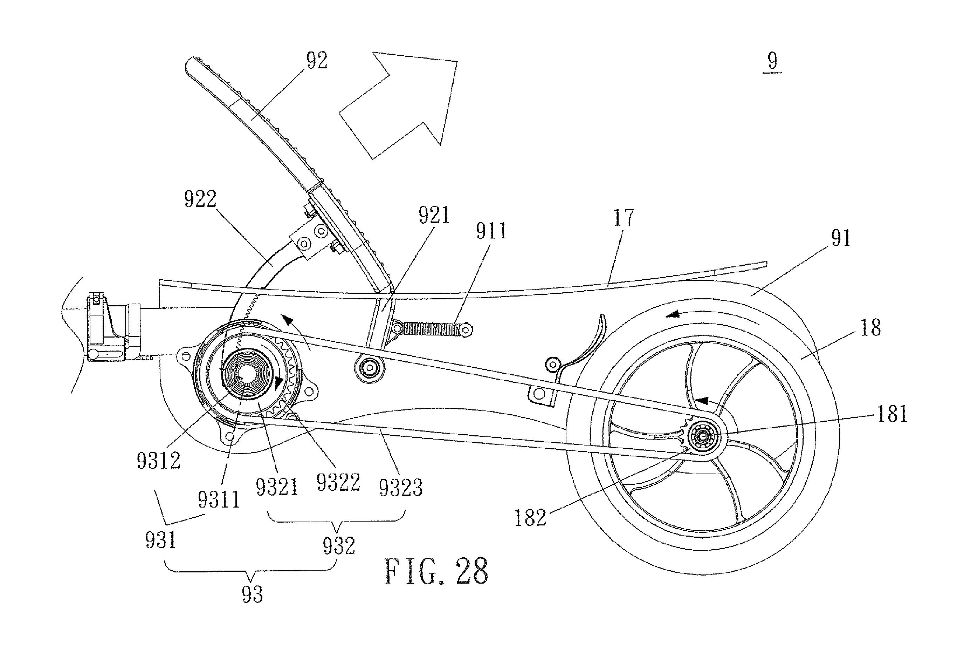

As shown in Figs. 27 and 28, when the pedals 92 are pressed alternatively, the swing arm 921 swings downward and the spring 911 is stretched, the curved rack 922 drives the transmission gear 9311 and the coil spring 9312 drives the one-way driving device 932. The one-way gear 9321 and the driving gear 9322 are co-rotated, wherein the one-way gear 9321 drives the passive gear 182 on the rear wheel axle 181 such that the rear wheel 18 rotates to move the tricycle forward. When the pedals 92 are released, the springs 911 bounce the pedals 92 back to their original positions and the curved rack 922 moves upward to release the coil spring 9312 such that the transmission gear 9311 rotates in opposite direction. The one-way gear 9321 is rotated in opposite direction too. Nevertheless, the one-way gear 9321 does not output torque to the driving gear 9322 so that the rear wheel 18 keeps on rotating to move the tricycle forward.

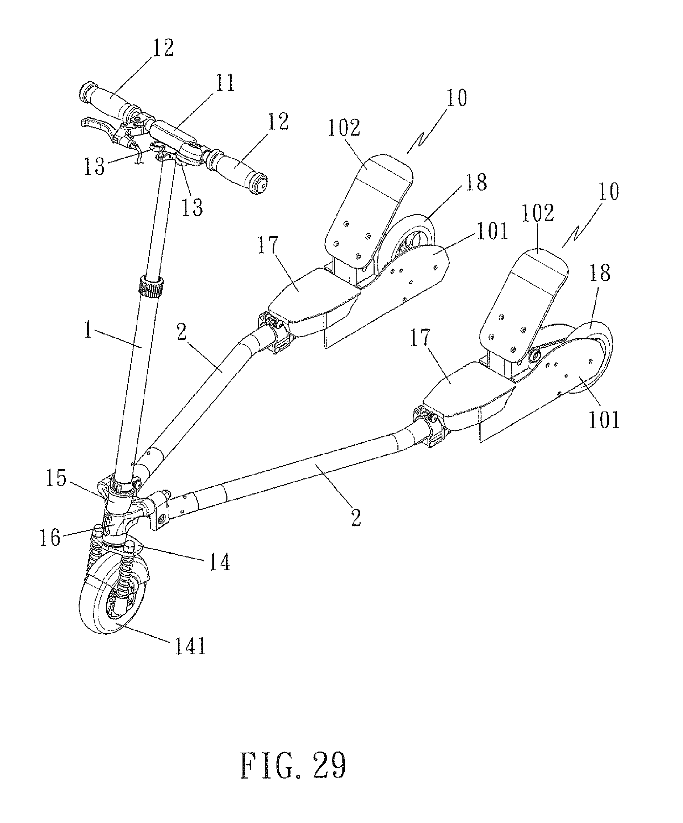

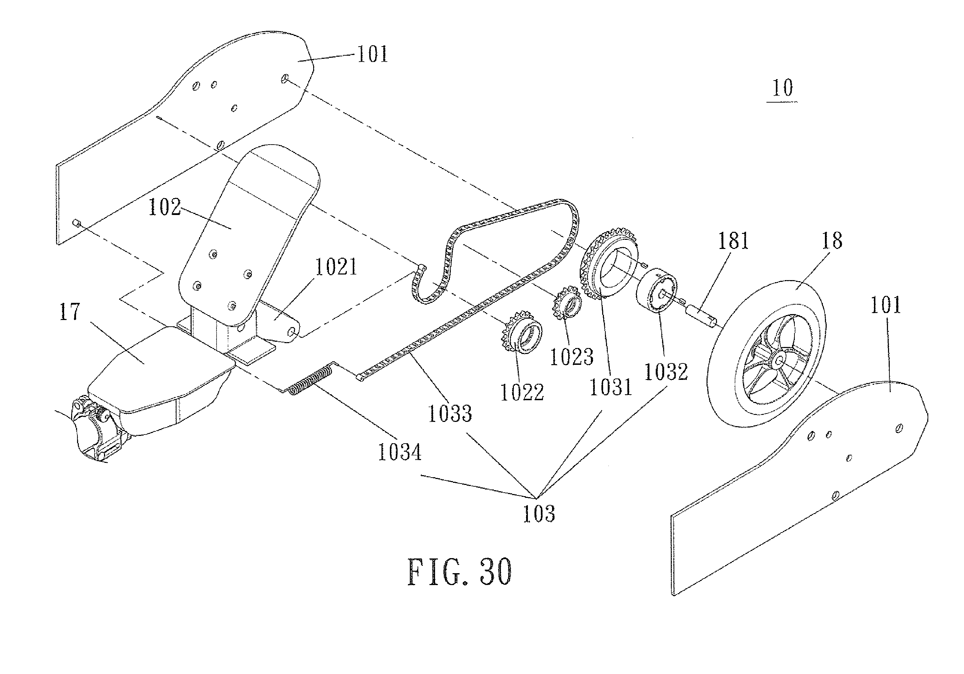

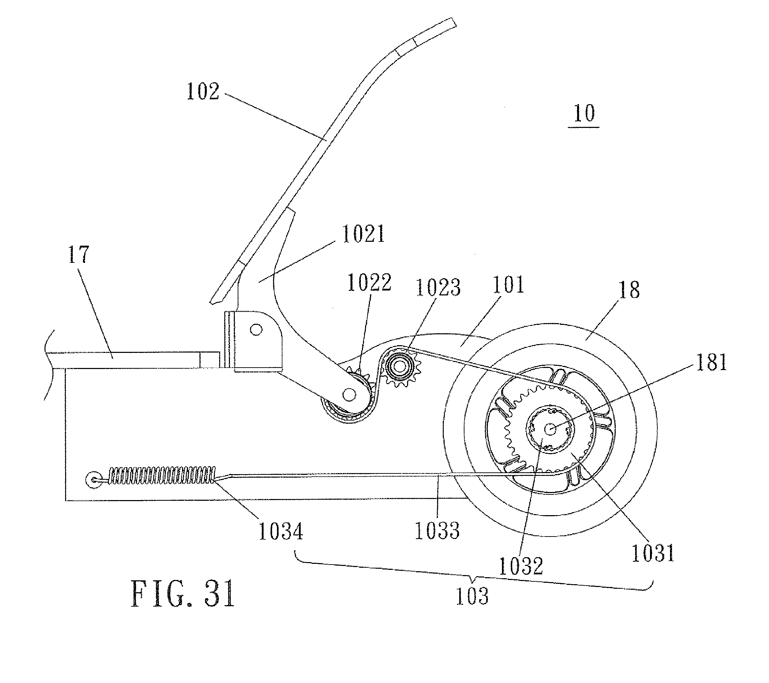

Figs. 29 to 31 show a third embodiment of the driving units of the tricycle, wherein the only difference form the first and second embodiment is the driving units 10.

The two driving units 10 which are respectively connected between the footboards 17 and the rear wheels 18. Each driving unit 10 includes a pair of side panels 101, a pedal 102 and a driving device 103. The two side panels 101 are connected to the underside of the footboard 17 and extend toward the rear wheel 18. The pedal 102 is connected to an end of the footboard 17 and pivotably connected to a swing arm 1021. A first gear 1022 is connected to the swing arm 1021 and a second gear 1023 is located between the first gear 1022 and the rear wheel 18. The driving device 103 includes a transmission gear 1031, a one-way gear 1032, a driving member 1033 and a spring 1034. The transmission gear 1031 and the one-way gear 1032 are mounted to a rear wheel axle 181 of the rear wheel 18. The one-way gear 1032 is located between the transmission gear 1031 and the rear wheel axle 181. The one-way gear 1032 is driven by the transmission gear 1031 and drives the rear wheel axle 181 and the rear wheel 18 to rotate in one direction. The driving member 1033 is a chain which has a first end fixed to the side panel 101 that is located close to the first gear 1022 and a second end of the driving member 1033 is engaged with the first and second gears 1022, 1023 and the transmission gear 1031 and is then connected with the spring 1034 which is fixed to the side panel 101.

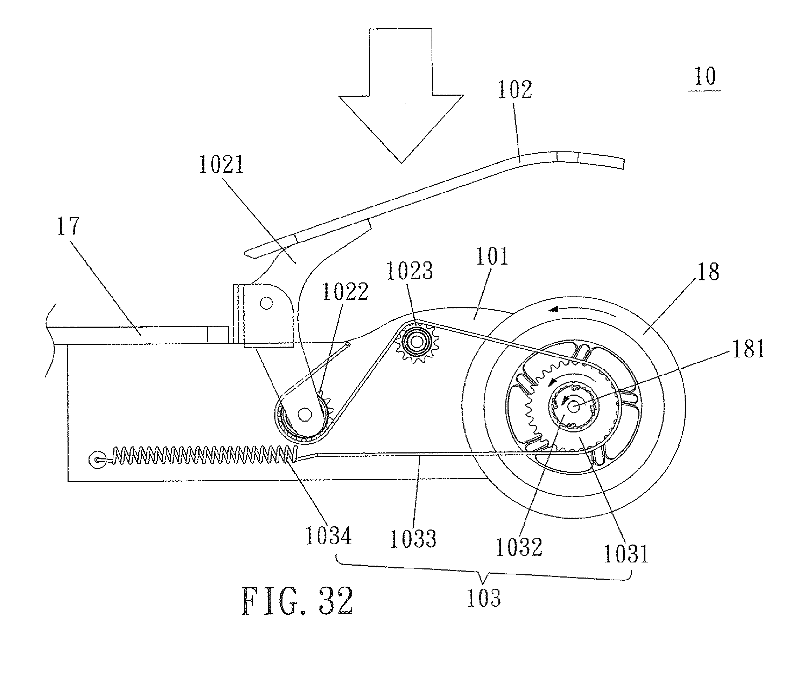

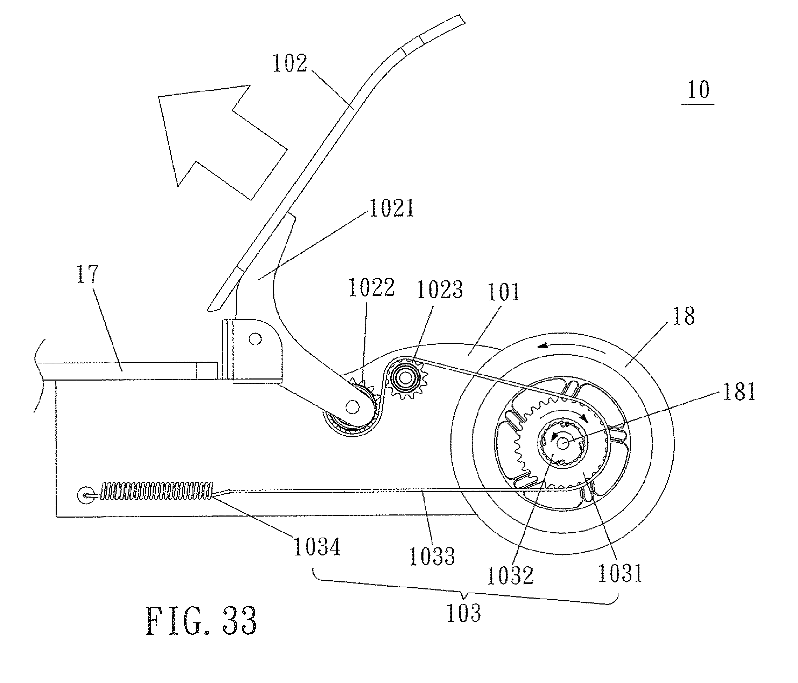

As shown in Figs. 32 and 33, the user holds the handles 12 and stands on the two footboards 17. When the user presses downward the two pedals 102 alternatively, the swing arm 1021 of each driving unit 10 is pivoted downward and stretches the spring 1034. The driving member 1033 drives the transmission gear 1031 so that the one-way gear 1032 drives the rear wheel axle 181 to rotate the rear wheel 18 to move the tricycle forward. When the user releases the pedal 102, the spring 1034 bounces the pedal 102 upward as shown in Fig. 33 and the driving member 1033 drives the transmission gear 1031 to rotate in opposite direction so that the wing arm 1021 and the pedal 102 move to their original positions. The one-way gear 1032 rotates in opposite direction. Nevertheless, the one-way gear 1032 does not output torque to the rear wheel axle 181 so that the rear wheel 18 keeps on rotating to move the tricycle forward.

The tricycle can be operated by the conventional way and the tricycle can also be move faster than the conventional tricycle by repeatedly and alternatively to activate the driving units which provide further torque to drive the rear wheels of the tricycle. The tricycle can be folded by activating the first, second and third folding units to be compact and easily carried and transported.

While we have shown and described the embodiment in accordance with the present invention, it should be clear to those skilled in the art that further embodiments may be made without departing from the scope of the present invention.

## Claims

1. A tricycle comprising:
a post (1) connected to a front wheel seat (14) and a front wheel (141) connected to the front wheel seat (14), a head tube (15) connected to a top of the front wheel seat (14) and a clamping member (16) connected to the head tube (15), two swing links (2) connected to the clamping member (16) and two footboards (17) respectively connected to the two swing links (2), two rear wheels (18) connected to the two footboards (17);
a first folding unit (3) connected between the post (1) and the front wheel seat (14), the first folding unit (3) including a base part (31), a connection member (32) and a fastening member (33), the base part (31) received in the head tube (15) and having an engaging slot (311) defined in a top thereof, the connection member (32) secured to a lower end of the post (1) by the fastening member (33) and having an insertion (321) which is pivotably connected to the engaging slot (311), an elongate slot (322) defined through the connection member (32) and the post (1) mounted to the connection member (32) and a pin (100) extending through the post (1) and the elongate slot (322) so as to allow the post (1) to move relative to the connection member (32) with the pin (100) moving along the elongate slot (322), the fastening member (33) mounted to the post (1) to fasten the post (1) to the connection member (32);
two second folding units (6) respectively connected between the swing links (2) and the clamping member (16), each second folding unit (6) including a fixing bar (61), a folding member (62) and a pin (64), the fixing bar (61) fixed to the clamping member (16) corresponding thereto, the fixing bar (61) including a horizontal groove (611) and a vertical groove (612), the folding member (62) fixed to the swing link (2) and including a tongue (621) and two blocks (622) on two sides of the tongue (621), the tongue (621) engaged with the horizontal groove (611) and the two blocks (622) engaged with the vertical groove (612), the tongue (621) including a slide slot (623) and a fixing pin (63) extending through the fixing bar (61) and the slide slot (623) so that the folding member (62) is movable within the horizontal slot (611), the fixing bar (61) including a first fix hole (613) which is located in alignment with a second fix hole (624) in the tongue (621), another pin (64) extending through the first fix hole (613) and the second fix hole (624) to connect the fixing bar (61) and the folding member (62);
two third folding units (7) respectively connected between the two footboards (17) and the two swing links (2), each third folding unit (7) including a mounting member (71) and an end member (72), the mounting member (71) having a pair of clamping arms (711) between which the swing link (2) is securely clamped, a locking device (712) connected to the pair of clamping arms (711) to securely clamp the swing link (2), two lips (713) located to the mounting member (71) and opposite to the clamping arms (711), each lip (713) having a guide slot (714), an engaging recess (715) defined in a surface of the mounting member (71) and located between the two lips (713), the end member (72) fixed to an underside of the footboard (17) and including a tubular member (721) which includes an annular groove with which the swing link (2) is engaged, a protrusion (722) located on an outside of the tubular member (721) and a gap defined between the protrusion (722) and the tubular member (721), the protrusion (722) having a notch (7221) defined in axially therein and a reception recess (7222) defined through the protrusion (722), the protrusion (722) located between the two lips (713), a lever (723) located in the notch (7221) and having a stub (7231) extending from an inside thereof, the stub (7231) removably inserted into the reception recess (7222), a spring (7232) biased between the lever (723) and an inside of the notch (7221), two pins (73) extending through the guide slots (714) and connected to the protrusion (722) so that the end member (72) is pivotable about two pins (73), and
two driving units (8) respectively connected between the footboards (17) and the rear wheels (18), each driving unit (8) including a pair of side panels (81), a pedal (82) and a driving device (83), the two side panels (82) connected to the underside of the footboard (17) and extending toward the rear wheel (18), a pair of frames (811) connected to an underside of the pedal (82) which is pivotably connected between the side panels (81) by the frames (811), two springs (812) connected between the side panels (81) and the pedal (82), one of the two frames (811) having a driving arm (813) and a driving member (814) connected a distal end of the driving arm (813), the driving device (83) fixed to one of the side panels (81) and including a rotary device (831) and a one-way driving device (832) which is co-axially connected with the rotary device (831), the rotary device (831) including a transmission gear (8311) and a coil spring (8312), the transmission gear (8311) connected with the driving member (814) and a first end of the coil spring (8312) connected to the side panel (81), a second end of the coil spring (8312) engaged with the transmission gear (8311), the one-way driving device (832) including a one-way gear (8321) and a driving gear (8322), the one-way gear (8321) driven by the rotary device (831) and driving the driving gear (8322) in one direction, the rear wheel (18) including a rear wheel axle (181) which is connected between the two side panels (81), the rear wheel axle (181) having a passive gear (182) which is engaged with and driven by the driving gear (8322).

2. The tricycle claimed in claim 1, wherein the driving member (814) is a chain or a belt or a steel cable.

3. The tricycle claimed in claim 1, wherein a suspension unit (4) is connected between the clamping member (16) and the two swing links (2), the suspension unit (4) includes a pair of cantilever arms (41) which are pivotably connected to the clamping member (16), the second folding units (6) are connected between the two cantilever arms (41) and the two swing links (2), a dome head (42) is located between the two cantilever arms (41) and a transverse link (43) extends through the dome head (42), two springs (431) are mounted to two ends of the transverse link (43) and biased between the dome head (42) and the cantilever arms (41).

4. The tricycle as claimed in claim 1, wherein two shock absorbing units (5) are located on two sides of the front wheel (141) and each shock absorbing unit (5) includes a base member (51), a rod (52) and a spring (53), the base member (51) is fixed to a front wheel axle (142) and has an extension tube (511), the rod (52) extends through the base member (51) and the extension tube (511) from an underside of the base member (51), the spring (52) is mounted to the extension tube (511), the rod (52) is fixed to the front wheel seat (14), the spring (53) is biased between the front wheel seat (14) and the base member (51).

5. A tricycle comprising:
a post (1) connected to a front wheel seat (14) and a front wheel (141) connected to the front wheel seat (14), a head tube (15) connected to a top of the front wheel seat (14) and a pair of clamping member (16) connected to the head tube (15), two swing links (2) connected to the clamping member (16) and two footboards (17) respectively connected to the two swing links (2), two rear wheels (18) connected to the two footboards (17);
a first folding unit (3) connected between the post (1) and the front wheel seat (14), the first folding unit (3) including a base part (31), a connection member (32) and a fastening member (33), the base part (31) received in the head tube (15) and having an engaging slot (311) defined in a top thereof, the connection member (32) secured to a lower end of the post (1) by the fastening member (33) and having an insertion (321) which is pivotably connected to the engaging slot (311), an elongate slot (322) defined through the connection member (32) and the post (1) mounted to the connection member (32) and a pin (100) extending through the post (1) and the elongate slot (322) so as to allow the post (1) to move relative to the connection member (32) with the pin (100) moving along the elongate slot (322), the fastening member (33) mounted to the post (1) to fasten the post (1) to the connection member (32);
two second folding units (6) respectively connected between the swing links (2) and the clamping member (16), each second folding unit (6) including a fixing bar (61), a folding member (62) and a pin (64), the fixing bar (61) fixed to the clamping member (16) corresponding thereto, the fixing bar (61) including a horizontal groove (611) and a vertical groove (612), the folding member (62) fixed to the swing link (2) and including a tongue (621) and two blocks (622) on two sides of the tongue (621), the tongue (621) engaged with the horizontal groove (611) and the two blocks (622) engaged with the vertical groove (612), the tongue (621) including a slide slot (623) and a fixing pin (63) extending through the fixing bar (61) and the slide slot (623) so that the folding member (62) is movable within the horizontal slot (611), the fixing bar (61) including a first fix hole (613) which is located in alignment with a second fix hole (624) in the tongue (621), another pin (64) extending through the first fix hole (613) and the second fix hole (624) to connect the fixing bar (61) and the folding member (62);
two third folding units (7) respectively connected between the two footboards (17) and the two swing links (2), each third folding unit (7) including a mounting member (71) and an end member (72), the mounting member (71) having a pair of clamping arms (711) between which the swing link (2) is securely clamped, a locking device (712) connected to the pair of clamping arms (711) to securely clamp the swing link (2), two lips (713) located to the mounting member (71) and opposite to the clamping arms (711), each lip (713) having a guide slot (714), an engaging recess (715) defined in a surface of the mounting member (71) and located between the two lips (713), the end member (72) fixed to an underside of the footboard (17) and including a tubular member (721) which includes an annular groove with which the swing link (2) is engaged, a protrusion (722) located on an outside of the tubular member (721) and a gap defined between the protrusion (722) and the tubular member (721), the protrusion (722) having a notch (7221) defined in axially therein and a reception recess (7222) defined through the protrusion (722), the protrusion (722) located between the two lips (713), a lever (723) located in the notch (7221) and having a stub (7231) extending from an inside thereof, the stub (7231) removably inserted into the reception recess (7222), a spring (7232) biased between the lever (723) and an inside of the notch (7221), two pins (73) extending through the guide slots (714) and connected to the protrusion (722) so that the end member (72) is pivotable about two pins (73), and
two driving units (9) respectively connected between the footboards (17) and the rear wheels (18), each driving unit (9) including a support member (91), a pedal (92) and a driving device (93), the support frame (91) connected to an underside to the footboard (17) and the pedal (92) located on a top of the footboard (17), a swing arm (921) and a curved rack (922) connected to a lower end of the pedal (92), the swing arm (921) pivotably connected to the support member (91) and a spring (911) connected between the support frame (91) and the swing arm (921), the driving device (93) fixed to the support member (91) and including a rotary device (931) and a one-way driving device (932) which his co-axially connected to the rotary device (931), the rotary device (931) including a transmission gear (9311) and a coil spring (9312), the transmission gear (9311) engaged with the curved rack (922) and the coil spring (9312) connected between the support member (91) and the transmission gear (9311), the one-way driving device (932) including a one-way gear (9321), a driving gear (9322) and a driving member (9323), the one-way gear (9321) driven by the rotary device (931) and driving the driving gear (9322) and the driving member (9323) in one direction, the rear wheel (18) including a rear wheel axle (181) which is rotatably connected to the support member (91) and the rear wheel axle (181) having a passive gear (182) which is engaged with the driving member (9323) and driven by the driving member (9323).

6. The tricycle claimed in claim 5, wherein the driving member (9323) is a chain or a belt or a steel cable.

7. The tricycle claimed in claim 5, wherein a suspension unit (4) is connected between the clamping member (16) and the two swing links (2), the suspension unit (4) includes a pair of cantilever arms (41) which are pivotably connected to the clamping member (16), the second folding units (6) are connected between the two cantilever arms (41) and the two swing links (2), a dome head (42) is located between the two cantilever arms (41) and a transverse link (43) extends through the dome head (42), two springs (431) are mounted to two ends of the transverse link (43) and biased between the dome head (42) and the cantilever arms (41).

8. The device as claimed in claim5, wherein two shock absorbing units (5) are located on two sides of the front wheel (141) and each shock absorbing unit (5) includes a base member (51), a rod (52) and a spring (53), the base member (51) is fixed to a front wheel axle (142) and has an extension tube (511), the rod (52) extends through the base member (51) and the extension tube (511) from an underside of the base member (51), the spring (52) is mounted to the extension tube (511), the rod (52) is fixed to the front wheel seat (14), the spring (53) is biased between the front wheel seat (14) and the base member (51).

9. A tricycle comprising:
a post (1) connected to a front wheel seat (14) and a front wheel (141) connected to the front wheel seat (14), a head tube (15) connected to a top of the front wheel seat (14) and a pair of clamping member (16) connected to the head tube (15), two swing links (2) connected to the clamping member (16) and two footboards (17) respectively connected to the two swing links (2), two rear wheels (18) connected to the two footboards (17);
a first folding unit (3) connected between the post (1) and the front wheel seat (14), the first folding unit (3) including a base part (31), a connection member (32) and a fastening member (33), the base part (31) received in the head tube (15) and having an engaging slot (311) defined in a top thereof, the connection member (32) secured to a lower end of the post (1) by the fastening member (33) and having an insertion (321) which is pivotably connected to the engaging slot (311), an elongate slot (322) defined through the connection member (32) and the post (1) mounted to the connection member (32) and a pin (100) extending through the post (1) and the elongate slot (322) so as to allow the post (1) to move relative to the connection member (32) with the pin (100) moving along the elongate slot (322), the fastening member (33) mounted to the post (1) to fasten the post (1) to the connection member (32);
two second folding units (6) respectively connected between the swing links (2) and the clamping member (16), each second folding unit (6) including a fixing bar (61), a folding member (62) and a pin (64), the fixing bar (61) fixed to the clamping member (16) corresponding thereto, the fixing bar (61) including a horizontal groove (611) and a vertical groove (612), the folding member (62) fixed to the swing link (2) and including a tongue (621) and two blocks (622) on two sides of the tongue (621), the tongue (621) engaged with the horizontal groove (611) and the two blocks (622) engaged with the vertical groove (612), the tongue (621) including a slide slot (623) and a fixing pin (63) extending through the fixing bar (61) and the slide slot (623) so that the folding member (62) is movable within the horizontal slot (611), the fixing bar (61) including a first fix hole (613) which is located in alignment with a second fix hole (624) in the tongue (621), another pin (64) extending through the first fix hole (613) and the second fix hole (624) to connect the fixing bar (61) and the folding member (62);
two third folding units (7) respectively connected between the two footboards (17) and the two swing links (2), each third folding unit (7) including a mounting member (71) and an end member (72), the mounting member (71) having a pair of clamping arms (711) between which the swing link (2) is securely clamped, a locking device (712) connected to the pair of clamping arms (711) to securely clamp the swing link (2), two lips (713) located to the mounting member (71) and opposite to the clamping arms (711), each lip (713) having a guide slot (714), an engaging recess (715) defined in a surface of the mounting member (71) and located between the two lips (713), the end member (72) fixed to an underside of the footboard (17) and including a tubular member (721) which includes an annular groove with which the swing link (2) is engaged, a protrusion (722) located on an outside of the tubular member (721) and a gap defined between the protrusion (722) and the tubular member (721), the protrusion (722) having a notch (7221) defined in axially therein and a reception recess (7222) defined through the protrusion (722), the protrusion (722) located between the two lips (713), a lever (723) located in the notch (7221) and having a stub (7231) extending from an inside thereof, the stub (7231) removably inserted into the reception recess (7222), a spring (7232) biased between the lever (723) and an inside of the notch (7221), two pins (73) extending through the guide slots (714) and connected to the protrusion (722) so that the end member (72) is pivotable about two pins (73), and
two driving units (10) respectively connected between the footboards (17) and the rear wheels (18), each driving unit (10) including a pair of side panels (101), a pedal (102) and a driving device (103), the two side panels (101) connected to the underside of the footboard (17) and extending toward the rear wheel (18), the pedal (102) connected to an end of the footboard (17) and pivotably connected to a swing arm (1021), a first gear (1022) connected to the swing arm (1021), a second gear (1023) located between the first gear (1022) and the rear wheel (18), the driving device (103) including a transmission gear (1031), a one-way gear (1032), a driving member (1033) and a spring (1034), the transmission gear (1031) and the one-way gear (1032) mounted to a rear wheel axle (181) of the rear wheel (18), the one-way gear (1032) located between the transmission gear (1031) and the rear wheel axle (181), the one-way gear (1032) driven by the transmission gear (1031) and driving the rear wheel axle (181) and the rear wheel (18) to rotate in one direction, the driving member (1033) being a chain which has a first end fixed to the side panel (101) that is located close to the first gear (1022) and a second end of the driving member (1033) engaged with the first and second gears (1022, 1023), the transmission gear (1031) and connected with the spring (1034) which is fixed to the side panel (101).

10. The tricycle claimed in claim 9, wherein a suspension unit (4) is connected between the clamping member (16) and the two swing links (2), the suspension unit (4) includes a pair of cantilever arms (41) which are pivotably connected to the clamping member (16), the second folding units (6) are connected between the two cantilever arms (41) and the two swing links (2), a dome head (42) is located between the two cantilever arms (41) and a transverse link (43) extends through the dome head (42), two springs (431) are mounted to two ends of the transverse link (43) and biased between the dome head (42) and the cantilever arms (41).

11. The device as claimed in claim 9, wherein two shock absorbing units (5) are located on two sides of the front wheel (141) and each shock absorbing unit (5) includes a base member (51), a rod (52) and a spring (53), the base member (51) is fixed to a front wheel axle (142) and has an extension tube (511), the rod (52) extends through the base member (51) and the extension tube (511) from an underside of the base member (51), the spring (52) is mounted to the extension tube (511), the rod (52) is fixed to the front wheel seat (14), the spring (53) is biased between the front wheel seat (14) and the base member (51).
